# EUROPEAN PATENT SPECIFICATION

(11) **EP 1 226 078 B1**
(45) Date of publication and mention of the grant of the patent: **21.07.2004**
(21) Application number: 00973044.1
(22) Date of filing: 03.11.2000
(51) Int. Cl.: B65D 79/00, B67D 1/04

(54) **BEVERAGE CONTAINER**
GETRÄNKEBEHÄLTER
CONTENANT A BOISSON

(30) Priority: 05.11.1999 GB 9926339; 02.12.1999 GB 9928564; 28.02.2000 GB 0004677; 29.06.2000 GB 0016042; 29.06.2000 GB 0016044
(43) Date of publication of application: 31.07.2002
(60) Divisional application: 04011048.8
(73) Proprietor: Nytrotec Beverages Ltd, Cork (IE)
(72) Inventor: BYRNE, Charles Michael, Carrigrohane:Cork (IE); MURPHY, Matthew Francis, Ovens, Cork (IE)
(74) Representative: Perry, Robert Edward
(86) International application number: PCT/GB2000/004232
(87) International publication number: WO 2001/032530

(56) References cited:
- EP-A- 0 197 732
- EP-A- 0 745 329
- WO-A-93/10021
- GB-A- 2 299 978
- US-A- 3 845 220
- US-A- 4 040 342
- US-A- 5 040 703
- US-A- 5 853 782

## Description

### Field of the Invention

This invention relates to the dispensing of beverages, and to beverage containers. In particular, the invention relates to devices that can provide a beverage with a "head".

### Background of the Invention

When dispensing carbonated beverages, particularly beers and especially draught stout, it is desirable that the beer should have a close-knit creamy head. The formation of the head, comprising fine bubbles, and known as puthering, may be achieved by injecting inert gas into draught beer, for dispensing in bars. These systems are not practical for domestic consumption. For that market, the past decade has seen the development of beer cans having an openable closure and including an insert that gasifies the beer when the closure, e.g. a ring-pull, is opened.

An early example of such an insert is described in GB-A-2183592. An improved insert is described in WO-A-91/07326. The insert has a pressure-responsive valve, and may be arranged so that its internal pressure is increased after the container is sealed; alternatively, the valve may have a different release pressure when initially inserted into the container from that when opening it. It is a requirement that the insert contains substantially no oxidising gas.

The beverages coffee and tea are typically served hot or iced. Iced tea is especially popular in southern states of the USA and in the Middle East. One variant of iced coffee, that is particularly popular around the Mediterranean, is café frappé. This is usually made in bars, by whisking individual cups of coffee, to entrain air and produce a head of bubbles. Ice may then be added.

GB-A-2183592 discloses a container comprising a beverage saturated only with an inert gas. The given beverages are beer, stout, ale, lager, cider, fruit juice, squash, cola, lemonade, milk, milk-based drinks and alcoholic drinks (spirits, liqueurs, wine or wine-based drinks).

EP-A-0745329, on which the two-part form of claim 1 is based, discloses a container including coffee saturated with an inert gas. The coffee is carbonated.

### Summary of the Invention

The present invention is based on the surprising discovery that puthering can be achieved in coffee and tea, so that they can be dispensed with a creamy head, simply by the introduction of nitrogen, e.g. by injection. More particularly, it has been appreciated that beverage containers of the type that have been made for gasifying beer can be adapted to the ready, convenient preparation of café frappé, but that the insert required for beer may not be necessary.

According to the present invention, a container includes coffee or tea saturated with an inert gas such as nitrogen, and which is non-carbonated.

The container may be a keg including bulk beverage. The container may alternatively be a can or bottle. The container may have an openable closure; in this case, it may optionally include an insert that gasifies the beverage when the closure is opened.

### Description of the Invention

The invention relates to the dispensing of coffee or tea. For this purpose, the beverage may be prepared and stored in bulk, i.e. in a volume of more than one, and typically more than 20 or 50 cups, e.g. as in a beer keg.

The invention also relates to smaller containers, suitable for domestic use. This aspect may be described by way of example only with reference to the drawings and associated description in WO-A-91/07326. In that document, it is intended that the beverage 7 should be beer and that the insert 5 should contain carbon dioxide, nitrogen or a mixture thereof; according to the present invention, the beverage is coffee and, while the gas may be the same, it can also, if desired, be air or another oxygen-containing gas. As will be understood by those skilled in the art, the pressure generated on opening the closure, the relative volumes of liquid and head space in the container, and other criteria appropriate to the desired appearance of the coffee when dispensed can be chosen as necessary. More broadly, however, such an insert is not required for use in this invention.

The materials of the container and the insert can be of the type that are already known for carbonated beer containers, and as described in WO-A-91/07326. The container may be a can or bottle.

Coffee or tea may contain a predetermined amount of known flavourings and/or additives such as or other sweetener, sugar, milk/milk substitute, cream, stabilisers, anti-oxidants, emulsifiers, alcohol (e.g. as a liqueur or spirit, such as in the case of Irish coffee) and flavouring; suitable flavourings, especially for coffee, include chocolate, cocoa, vanilla or other essences and/or fig or chicory extract. Clearly, it is possible to provide products of the invention in which the coffee or tea is unsweetened, or pre-sweetened to different degrees, and these may be chosen by the consumer according to taste.

If necessary or desired, a foam-retaining agent may be included. This may help to hold the "head", and it may also give the beverage a "smoothie" effect. A preferred foam-retaining agent is polyglycol alginate (PGA) which is already used in the brewing industry for the purpose of maintaining the foam head when beer is dispensed. Another agent that can be used is microcrystalline cellulose, e.g. as is sold under the name Avicel®. Other agents having the same desired effect can be determined by those skilled in the art, and include carragheenan and alginates. The agent should of course be approved for food use. The amount of this agent may be very small, e.g. 0.05 to 1%, possibly up to 5% by weight of the beverage, but can be chosen as necessary, e.g. with regard to the desired degree of puthering. Such an agent also provides body, so that a soft drink has the characteristics of a "smoothie".

As indicated above, café frappé has hitherto been made on an individual basis, usually in a warm ambient atmosphere, and has typically then had ice added to it. The present invention allows the beverage to be pre-chilied, thereby providing relative simplicity and economy when dispensed in bars, as well as making the drink much more readily available for domestic use.

The following Examples illustrate the invention.

### Example 1

Ground coffee was brewed, chilled to 0°C and injected with nitrogen at 4 bar, and canned with an insert as described above. The product was pasteurised in a tunnel pasteuriser at 67°C for 8 minutes. On opening the can and dispensing the coffee, it had a creamy head.

### Example 2

Ground coffee was brewed and chilled to 0°C. Whisky was added to give 5% g w/v of alcohol in the product which was then injected with nitrogen at 4 bar and bottled. The product was pasteurised in a tunnel pasteuriser at 67°C for 8 minutes. On opening the bottle and dispensing the coffee, it had a creamy head.

## Claims

1. A container including a beverage selected from coffee and tea, and saturated with an inert gas, **characterised in that** the beverage is non-carbonated.

2. A container according to claim 1, wherein the beverage also includes one or more additives selected from sweeteners, milk, milk substitute, cream, stabilisers, anti-oxidants, emulsifiers, alcohol, and flavourings.

3. A container according to any preceding claim, wherein the beverage also includes a foam-retaining agent.

4. A container according to claim 3, wherein the foam-retaining agent is polyglycol alginate or microcrystalline cellulose.

5. A container according to any preceding claim, having an openable closure.

6. A container according to claim 5, which is a can or bottle having, as the closure, a removable part defined by a line of relative weakness and bearing a ring or other manually-engageable tab.

7. A container according to claim 5 or claim 6, which also includes an insert that gasifies the beverage or soft drink when the closure is opened.

8. A container according to any preceding claim, wherein the inert gas is nitrogen.

9. A container according to any preceding claim, wherein the beverage is coffee.

10. A container according to any preceding claim, wherein the beverage is unsweetened.

## Patentansprüche

1. Behälter enthaltend ein Getränk, ausgewählt aus Kaffee und Tee und gesättigt mit einem inerten Gas, **dadurch gekennzeichnet, dass** das Getränk nicht kohlensäurehaltig ist.

2. Behälter nach Anspruch 1, worin das Getränk auch einen oder mehrere Zusatzstoffe enthält, ausgewählt aus Süßungsmitteln, Milch, Milchersatzstoffen, Sahne, Stabilisatoren, Antioxidantien, Emulgatoren, Alkohol und Geschmacksstoffen.

3. Behälter nach irgendeinem vorangehenden Anspruch, worin das Getränk auch ein Schaum zurückhaltendes Mittel enthält.

4. Behälter nach Anspruch 3, worin das Schaum zurückhaltende Mittel Polyglycolalginat oder mikrokristalline Cellulose ist.

5. Behälter nach irgendeinem der vorangehenden Ansprüche mit einem zu öffnenden Verschluss.

6. Behälter nach Anspruch 5, welcher eine Dose oder Flasche ist, die als Verschluss ein entfernbares Teil aufweist, welches durch eine Linie relativer Schwäche definiert ist und einen Ring oder eine andere manuell betätigbare Lasche aufweist.

7. Behälter nach Anspruch 5 oder 6, welcher auch einen Einsatz aufweist, der das Getränk oder alkoholfreie Getränk mit Gas versetzt, wenn der Verschluss geöffnet wird.

8. Behälter nach irgendeinem vorangehenden Anspruch, worin das inerte Gas Stickstoff ist.

9. Behälter nach irgendeinem vorangehenden Anspruch, worin das Getränk Kaffee ist.

10. Behälter nach irgendeinem vorangehenden Anspruch, worin das Getränk ungesüßt ist.

## Revendications

1. Récipient contenant une boisson sélectionnée parmi le café et le thé, et saturée en un gaz inerte, **caractérisé en ce que** la boisson est sans ajout d'anhydride carbonique.

2. Récipient selon la revendication 1, dans lequel la boisson contient aussi un ou plusieurs additifs sélectionnés parmi les édulcorants, le lait, un succédané du lait, la crème, les stabilisants, les antioxydants, les émulsifiants, l'alcool, et les aromatisants.

3. Récipient selon l'une quelconque des revendications précédentes, dans lequel la boisson contient aussi un agent de maintien de la mousse.

4. Récipient selon la revendication 3, dans lequel l'agent de maintien de la mousse est un alginate de polyglycole ou une cellulose microcristalline.

5. Récipient selon l'une quelconque des revendications précédentes, disposant d'un dispositif de fermeture pouvant s'ouvrir.

6. Récipient selon la revendication 5, qui est une canette ou une bouteille disposant, comme dispositif de fermeture, d'une partie pouvant être retirée définie par une ligne d'une relative faiblesse et portant un anneau ou un autre organe de traction pouvant être pris en main.

7. Récipient selon la revendication 5 ou la revendication 6, qui comprend aussi un élément rapporté qui gazéifie la boisson ou la boisson gazeuse lorsque le dispositif de fermeture est ouvert.

8. Récipient selon l'une quelconque des revendications précédentes, dans lequel le gaz inerte est l'azote.

9. Récipient selon l'une quelconque des revendications précédentes, dans lequel la boisson est du café.

10. Récipient selon l'une quelconque des revendications précédentes, dans lequel la boisson est non sucrée.
